# EUROPEAN PATENT APPLICATION

(11) **EP 3 493 006 A1**
(43) Date of publication of application: **05.06.2019**
(21) Application number: 17204493.5
(22) Date of filing: 29.11.2017
(51) Int. Cl.: G05B 19/4099, G06Q 30/08, G05B 19/418

(54) **METHOD FOR OPERATING AN APPARATUS FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Schumann, Philipp, 96274 Itzgrund - Schottenstein (DE)
(74) Representative: Hafner & Kohl

(57) **Abstract**

Method for operating at least one apparatus (5, 6) for additively manufacturing of three-dimensional objects (7 - 9) by means of successive layerwise selective irradiation and consolidation of layers of a build material (10) which can be consolidated by means of an energy beam (11), wherein a communication interface (4) connected or connectable with the at least one apparatus (5, 6) is adapted to receive at least a first data set (14, 15) comprising object data from at least a first user (1, 2) of a first user group (3), relating to at least one object (7 - 9) to be built, and at least a second data set (16, 17) from at least one second user (18, 19) of a second user group (20), wherein the at least one first data set (14, 15) and/or the at least one second data set (16, 17) is stored and/or build data are generated and/or stored relating to the at least one object (7 - 9) to be built corresponding to the received data sets (14 - 17).

## Description

The invention relates to a method for operating at least one apparatus for additively manufacturing of three-dimensional objects by means of successive layerwise selective irradiation and consolidation of layers of a build material which can be consolidated by means of an energy beam.

Additive manufacturing apparatuses and methods for operating the same are well known in prior art. Said additive manufacturing processes are advantageous, in particular for manufacturing of prototypes, wherein the manufacturing of individual objects or small quantities of three-dimensional objects may be expensive. The entire build plane, i.e. the plane of build material inside a process chamber on which the energy beam is adapted to directly irradiate the build material, may only be occupied to a minor degree, if the apparatus is used to only manufacture individual objects or small quantities.

In particular, for users, e.g. for consumers, who only want to manufacture an individual object, e.g. a prototype (or small quantities of prototypes), additive manufacturing processes therefore, may not be affordable, since the individual user would have to bear the entire costs, wherein a significant amount of build material is wasted or has to be recycled, since building the individual object or small quantity may not make effective use of the available build plane.

Thus, it is an object to the present invention to provide a method for operating at least one apparatus for additively manufacturing of three-dimensional objects, wherein the costs for a user are reduced.

The object is inventively achieved by a method according to claim 1. Advantageous embodiments of the invention are subject to the dependent claims.

The method described herein is a method for operating an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The respective apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that a communication interface connected or connectable with the at least one apparatus is adapted to receive at least a first data set comprising object data from at least a first user of a first user group, relating to at least one object to be built, and to receive at least a second data set from a second user of a second user group, wherein the at least one first data set and/or the at least one second data set is stored and/or build data are generated and/or stored relating to the at least one object to be built corresponding to the received data sets.

Therefore, the at least one first user of the first user group can access the communication interface and transmit at least a first data set to the apparatus for additively manufacturing three-dimensional objects. The respective data set comprises object data that relate to the at least one object the first user of the first user group intends to manufacture using the or an additive manufacturing apparatus. The second user of the second user group can also access the communication interface and transmit at least a second data set to the apparatus for additively manufacturing three-dimensional objects. Deviant from the first data set, the second data set does not comprise information relating to an object the second user intends to build, but information relating to a manufacturing process, in particular information relating to the apparatus used to perform a manufacturing process operated by the second user.

The first user group may be defined as the "consumer"- or "client"-group, wherein the first users assigned to the first user group are, for example consumers or clients of a plant operator or a provider operating the at least one apparatus for additively manufacturing three-dimensional objects. Accordingly, the second user group may be defined as the "provider" - or "plant operator"-group, wherein the second users are providers or plant operators owning and/or operating at least one apparatus for additively manufacturing three-dimensional objects. For the sake of simplicity the terms "client" and "provider" are used throughout this application.

In other words, the communication interface functions as a platform on which the clients and providers can come together, by transmitting the respective first and second data sets to the communication interface. The communication interface receives the data sets and is adapted to transmit the data sets to at least one apparatus for additively manufacturing three-dimensional objects. Alternatively, the second user may transfer the corresponding data to the apparatus.

For example, the at least one first user of the first user group can submit a first data set, wherein the first data set relates to an object the first user wants to have additively manufactured. Analogously, the at least one second user of the second user group can submit a second data set, wherein the second data set relates to a manufacturing process that can be performed with at least one apparatus the second user operates. Thus, the second user may submit conditions an object can be manufactured on the respective apparatus, such as a price information. Dependent on the first data sets and the second data sets that have been submitted to the communication interface the first users and second users can come together, wherein the first users and/or the second users may select from the respective first data sets and second data sets.

Thus, it is possible for the first users to select from the second data sets submitted and/or it is possible for the second users to select from the first data sets submitted to the communication interface. Hence, at least one first user may "add" the at least one object the first user intends to have built to a manufacturing process offered by at least one second user. Accordingly, at least one a second user may "add" at least one object of at least one first user to a planned manufacturing process performed on at least one apparatus of the second user.

According to a first embodiment of the method, the at least one first data set, in particular the object data, comprises at least one of the following parameters:
- three-dimensional data of at least one object to be built
- at least one chemical parameter of the object to be built, in particular a material parameter
- at least one physical parameter of the object to be built, in particular a density and/or a mechanical property
- time information relating to a due date
- initiation information
- information relating to at least one post-processing step

Thus, typically the first data set contains information and/or parameters relating to the object the respective first user wants to have additively built. The respective first data set may comprise three-dimensional data of at least one object to be built. The three-dimensional data define the shape and/or at least an outer contour of the object therefore, defining the size and the dimensions of the object. It is also possible that the three-dimensional data additionally define the inner structure of the object.

In the respective first data set the at least one first user may define at least one chemical parameter of the object to be built, in particular a (build) material parameter. Hence, it is possible for the at least first user to define of which build material the object is to be built or which chemical properties the build material has to have. Accordingly, the at least one first user may define respective physical parameters, such as the density and/or mechanical properties of the build material and/or the built object.

Further, the at least one first user may define parameters relating to an initiation of the manufacturing process, in that initiation information and/or a time information relating to a due date can be added to the first data set. The time information refers to the due date up to which the three-dimensional object has to be built. The initiation information, accordingly, refers to at least one parameter that has to be present to allow for an initiation of the manufacturing process. For example, the initiation information may contain a threshold value relating to an occupancy rate of at least one build plane and/or at least one price information. In other words, the at least one first user may define the conditions required for the manufacturing process to be initiated, for example a price information that defines the costs the first user has to bear for having the object manufactured.

Further, it is possible to add information relating to at least one post-processing step, e.g. cleaning the built object or a surface finish of the built object, in particular a post processing step that may be requested by the corresponding user. It is also possible to add information relating to a shipment of the built object, in particular to verify that each object may be shipped to the corresponding user or a shipping method may be specified that is requested by the corresponding user.

The at least one second data set may comprise at least one of the following parameters:
- at least one chemical parameter of build material used on at least one build plane
- at least one physical parameter of build material used on at least one build plane
- at least one parameter relating to at least one energy beam
- at least one parameter relating to a process chamber, in particular an inertization parameter
- at least one information to at least one available post-processing step
- at least one time information
- at least one information relating to an occupancy rate of the at least one build plane
- at least one information relating to an availability of a process monitoring and/or a process documentation

Therefore, the at least one second user may define at least one chemical parameter of the build material that is used on the at least one build plane of the at least one apparatus the second user operates. This enables a selection of potential build jobs submitted by the at least one first user, in that the build jobs may be selected that correspond, e.g. in terms of the build material used. Analogously, the second user may define at least one physical parameter of build material used on at least one build plane of the at least one apparatus the second user operates.

Accordingly, the at least one second user may define at least one parameter relating to at least one energy beam. Of course, it is possible that the at least one apparatus the respective second user operates may generate a plurality of energy beams. Each energy beam may be defined regarding a variety of parameters, such as a beam power and/or a wavelength and/or a spot size and/or an available scanning speed and/or the type of source (laser beam, in particular laser diode, electron beam). Thus, the at least one second user may provide data relating to the available energy beam(s) in that the at least one first user may select or verify whether the apparatus provided by the second user is suitable for manufacturing the intended three-dimensional object.

Additionally, the at least one second user may add at least one information relating to a process chamber, in particular an inertization parameter to the at least one second data set. Thus, it is possible to add information regarding the size of the process chamber, i.e. the availability of space (or volume) in the process chamber, in particular on the build plane. Further, it is possible to give information regarding the inertization of the process chamber, for example which process gas is used (e.g. argon) and/or to which degree the process chamber is or can be made inert (inertization level) and/or how the inertization is performed (which inertization device is used).

Another information the at least one second user may add to the at least one second data set may relate to an occupancy rate of the at least one build plane. The occupancy rate of the build plane leads, for example, to the costs the individual first users have to bear, wherein it is advantageous to use the available build plane essentially to capacity, to avoid or reduce waste build material (non-consolidated build material) or build material that has to be recycled. The occupancy rate further allows for at least one first user to determine whether the at least one object can be manufactured on the respective build plane of the apparatus, by determining the remaining available area of the build plane. Inversely, the at least one second user may specifically select first data sets relating two objects that fit a remaining area of the build plane.

The at least one second user may further add at least one information relating to an availability of a process monitoring and/or a process documentation. Therefore, the at least one a second user may specify, whether and which means or devices for process monitoring and/or process documentation are available in the at least one apparatus the second user operates. Of course, additional information, such as the conditions for using the respective devices throughout a manufacturing process can be specified as well.

The provision of the first and/or second data sets further allows for a grouping of first users and/or second users, for example by the offered or requested build material. The individual first and/or second users may be assigned to a group specific for one information and/or one parameter, for example, the individual first and/or second users may be assigned to a build material specific group, e.g. an aluminum group, in which only first data sets relating to objects that are to be built of the selected build material and/or second data sets relating to apparatuses adapted to process the respective build material are submitted (listed).

Further, it is possible to add information relating to at least one post-processing step, e.g. cleaning the built object or a surface finish of the built object, in particular a post processing step that may be provided by the respective plant operator. It is also possible to add information relating to a shipment of the built object, in particular to verify that each object may be shipped to the corresponding user or at least one shipment method may be specified that is available. The shipment method(s) may further be taken into calculation regarding an overall price information. Additionally, an overall production time may be defined, containing the time required to additively build the three-dimensional object an the time for shipping the object.

According to another embodiment of the method, the at least one data set comprises build data relating to the at least one object to be built. Build data in the scope of this application refer to the manufacturing process of the individual object the build data correspond to. For example, the build data may relate to the irradiation strategy used to manufacture the object and/or a build material consumption or various other parameters of the apparatus for manufacturing three-dimensional objects that can be controlled, in particular affecting the manufacturing process. Hence, the at least one first user may define the build data and therefore, select, for example, which irradiation strategy is used in the manufacturing process.

Besides, it is also possible that the build data are generated by the at least one second user, for example a plant operator operating the apparatus the three-dimensional object is to be built with. The at least one second user may take several processing properties of the at least one apparatus the at least one second user operates into calculation. Further, the at least one second user may generate the build data based on the at least one a data set submitted by the at least one first user. Thus, the at least one a second user may select the respective parameters, e.g. the irradiation strategy, based on the first data set, e.g. the three-dimensional data of the at least one object to be built. It is also possible that the build data are generated automatically based on the object to be built, e.g. by a control unit of the apparatus.

The respective build data may particularly comprise at least one of the following parameters:
- at least one chemical parameter of the object to be built, in particular a material parameter
- at least one physical parameter of the object to be built, in particular a density and/or a mechanical property
- time information relating to a duration of the manufacturing process of the object to be built
- material consumption
- information relating to an irradiation strategy

The build data are based on the first data set the first user (of the first user group) transmits to the apparatus and are therefore, based on the object to be built. The build data define concrete parameters of the manufacturing process of the individual three-dimensional object. The build data may additionally contribute to the generation of price (cost) information relating to the price (costs) for the individual objects to be manufactured.

The method can further be improved by at least one set of job data generated dependent on at least two first data sets submitted by at least two first users, wherein at least two objects are assigned to the same build plane dependent on the at least one set of job data. The job data in the scope of this application refer to the entire manufacturing process, e.g. information relating to the entire available build plane. Thus, the job data relate to the manufacturing of the at least two objects on the same build plane or in the same manufacturing process, respectively.

The job data may comprise at least one of the following parameters:
- number of objects assigned to at least one build plane
- time information relating to a duration of the manufacturing process of all objects assigned to the same build plane
- price information
- initiation information
- occupancy rate of a build plane of the at least one apparatus
- number of build jobs
- number of users

Thus, the job data may relate to the number of objects assigned to the at least one build plane, for example, the apparatus the object data of at least two first users have been transmitted to via the communication interface may comprise at least one build plane on which the at least two objects of the at least two first users are to be manufactured. The job data may also relate to the area of the build plane that is required to manufacture the individual objects, wherein the required area of the build plane may particularly differ over the manufacturing process (in build direction), as the shape and/or the diameter of the individual cross-sections of the individual layers of the various objects, respectively, may differ in build direction. The build direction in the scope of this application refers to the direction the object is layerwise and successively built in. The build direction typically is arranged essentially perpendicular to the build plane or a build plate carrying the build material and the object, respectively.

Additionally or alternatively, an occupancy rate of the build plane of the at least one apparatus can be contained in the job data, wherein the areas of the build plane required to manufacture the at least two objects add up to the overall area of the build plane that is required, wherein the occupancy rate may be defined as the ratio of the required area to the available area of the build plane.

The job data further may comprise time information relating to the duration of the manufacturing process of all objects assigned to the same build plane. It is also possible to have the job data comprise information relating to the contributions of the individual objects to the overall manufacturing time. Thus, the ratio of the individual objects to be manufactured in the same manufacturing process on the overall process time can be taken into calculation, too.

For example, based on the time information and/or the number of objects and/or the occupancy rate, a price information may be generated corresponding to the individual objects to be manufactured in the manufacturing process, wherein various additional parameters may be taken into calculation, such as the material consumption and/or the irradiation strategy, for instance.

The job data may further comprise the number of build jobs (number of individual objects to be built in the same process) that are to be performed with the apparatus and/or the number of users that have transmitted their datasets to the apparatus. Besides, it is also possible to assign at least one object to one of multiple build planes, for example if more than one apparatus is available or at least one apparatus comprises more than one build plane, wherein the assignment may depend on the job data and/or the build data and/or the first data set of the at least one first user and/or the at least one second data set of the at least one second user. For example, the assignment may be performed dependent on the build material the objects are to be built of and/or the price information and/or the time information.

The method can further be improved in that a manufacturing process is initiated dependent on the job data, in particular dependent on the at least one initiation information. Thus, the initiation information defines when the manufacturing process of the at least one object is initiated. The initiation information itself can depend on various parameters, as described before, such as the time information relating to a due date contained in the at least one first data set of at least one first user and/or in the at least one second data set of the at least one second user.

According to another embodiment of the method, a data storage may be provided, wherein the job data and/or build data and/or the at least one first and/or second data set of at least one first and/or second user is stored. The data stored in the data storage may subsequently be used for the manufacturing process and/or be used for documentation and/or quality management purposes. It is also possible to transfer the stored data to other apparatuses, for example dependent on the availability or the occupancy rate of the build plane.

Preferably, the first and/or second data sets as well as the build data and/or the job data are transmitted and/or stored in an encrypted form. Thus, this embodiment assures that confidential information, such as the specific geometry or various construction parameters of individual objects, e.g. prototypes, of the individual users are encrypted and cannot be accessed by other users or, for example personnel that is not authorized to have access to these information. The communication interface may be designed as a platform on which at least one user (of the first user group) may transmit (upload and store) at least one data set relating to an object to be built. The communication interface may be connected to a plurality of apparatuses, wherein an assignment of the manufacturing process of the object to one of the available apparatuses may be performed automatically and/or dependent on a preference of the at least one first and/or second user. Thus, the at least one first user may be able to select from multiple second data sets of second users, e.g. the at least one first user may select one apparatus out of a plurality of apparatuses available via the communication interface. Inversely, at least one second user may be able to select a build job based on the at least one first data set available via the communication interface. Hence, the at least one second user may select one of multiple build jobs, e.g. based on which object to be built fits best the remaining area on the build plane of a planned manufacturing process. Particularly, the communication interface may be designed as internet platform, wherein a plurality of first users of the first user group has access to upload first data sets and a plurality of second users of the second user group has access to upload second data sets.

Advantageously, the data storage is at least partially accessible for at least one second user of the second user group, in particular the outer dimensions of at least one object to be built, is accessible to at least one user of the second user group. Thus, the at least one second user may at least partially access the at least one first data set submitted by the at least one first user. In particular, the at least one second user may gain access to three-dimensional data of the at least one object the at least one first user intends to have built. Based on the information gained, the at least one second user can determine, whether the at least one object fits into a planned manufacturing process, i.e. whether the remaining area of the build plane is suitable for building the at least one object of the first user. The at least one first data set may therefore, be abstracted to a defined degree in that details of the object, e.g. a prototype, may not be accessible to the at least one second user, for example, by only granting axis or showing the outer dimensions of the three-dimensional object.

It is also possible that the at least one second user may only receive the at least one first data set in an encrypted form, in that a determination, whether the object to be manufactured can be added to a planned manufacturing process or not and details of the three-dimensional object cannot be accessed by the at least one second user. Further, it can be assured that only qualified or authorized personnel or users can access the respective data, by at least one verification information, wherein only users, in particular second users of the second user group, with the corresponding verification information gain access to the at least one first data set or in particular restricted first data sets that are not open to the public.

Besides, the at least one first user, particularly essentially all first users may have access to the at least one second data set. Again, at least one verification information may be provided, wherein only first users with the corresponding verification information gain access to the at least one second data set or in particular restricted second data sets that are not publicly accessible.

Additionally, a topology of an object to be built may be optimized, in that a material consumption and/or a build time and/or an occupancy rate of the build plane of the apparatus is reduced. Thus, the first data sets comprising object data that are transmitted by the at least one first user to the communication interface may be adjusted, in particular optimized, to make the manufacturing process more efficient. For example, the orientation of the object to be built with respect to the build plane can be changed to facilitate the manufacturing process and/or to reduce a material consumption and/or to enhance the object quality. Further, the build data may be adjusted, especially with respect to the irradiation strategy.

According to another embodiment of the method, the communication interface may be adapted to receive at least one price (cost) information of at least one second user of the second user group, wherein at least one build job of a first user of the first user group is assigned to a manufacturing process of at least one second user of the second user group dependent on the price information. Thus, the at least one second user may provide a price information relating to the costs a first user of the first user group would have to bear, if the at least one object was manufactured in the apparatus the at least one a second user operates. Particularly, multiple second users may provide individual price information, wherein the respective first users can select from the different offers dependent on the price information. It is also possible, that build jobs are automatically assigned to second users that submitted the corresponding price information. The price information may be based on at least one first data set of at least one first user.

Alternatively or additionally, the communication interface may be adapted to receive at least one price (cost) information of at least two second users of the second user group, wherein at least one build job of at least one first user of the first user group is assigned to a manufacturing process of one of the second users of the second user group dependent on the received price information. Therefore, at least two second users may submit a price information to the communication interface, which price information is accessible by at least one first user. The at least one first user may then be able to select one of the second users of the second user group the respective build job shall be assigned to. Of course, the assignment of the build shop can also be performed at least partially automated, wherein the build job is assigned to the second user that submitted the corresponding price information, e.g. the lower price.

For example, the build job of the at least one first user may be auctioned, in that the respective build job assigned to the second user with the corresponding price information, e.g. the lowest price.

The method can further be improved in that a measurement device information is provided by the communication interface, which measurement device information is accessible for at least one first user of the first user group, wherein at least one location of a measuring unit is contained in the measurement device information, in particular at least one location of a 3D-scanner in the vicinity of the location of the at least one user of the first user group. Hence, measurement device information can be retrieved from the communication interface, wherein the first user can look up the location of, for example, the nearest measurement device suitable for measuring an object, particularly via a 3D-scanner. In other words, the first user can access the measurement device information and therefore, can be informed of measurement device is in the vicinity of the location the first user is interested in. The measurement device is preferably a measurement device open to be used by the public, wherein the first user may measure an object, for example via a 3D-scanner, to subsequently have the object built in an additive manufacturing process.

The invention further relates to an apparatus for additively manufacturing of three-dimensional objects by means of successive layerwise selective irradiation and consolidation of layers of a build material which can be consolidated by means of an energy beam, wherein a communication interface connected or connectable with the at least one apparatus is adapted to receive at least a first data set comprising object data from at least a first user of a first user group, relating to at least one object to be built, and at least a second data set from a user of a second user group, wherein build data are generated and/or stored relating to the at least one object to be built corresponding to the received data sets. Besides, the invention relates to communication interface for an inventive apparatus.

Self-evidently, all features, details and advantages described with respect to the inventive method are fully transferable to the inventive apparatus and the inventive communication interface.

An exemplary embodiment of the invention is described with reference to the Fig. The sole Fig. is a schematic diagram and shows an inventive apparatus.

The Fig. exemplarily shows two first users 1, 2 that are, for example, grouped into a first user group 3. The first users 1, 2 can, for example, be consumers or clients, wherein the first user group 3 can be regarded as "consumer"-group or "client"-group, respectively.

The Fig. further shows a communication interface 4 that is (directly or indirectly) connected with two additive manufacturing apparatuses 5, 6. that are adapted to additively manufacture three-dimensional objects 7 - 9 by means of successive layerwise selective irradiation and consolidation of layers of a build material 10 which can be consolidated by means of an energy beam 11. To generate and guide the energy beam 11 (or multiple energy beams 11) the apparatuses 5, 6 comprise an irradiation device 12 that is adapted to generate and guide the energy beam (or multiple energy beams 11) over a build plane 13. The build plane 13 is a surface of build material 10 in which build material 10 can be directly irradiated via the energy beam 11.

Although, the objects 7 - 9 are indicated with the same reference signs, of course, the apparatuses 5, 6 may manufacture different objects 7 - 9, wherein the apparatuses 5, 6 may use different build material 10. Further, the connection of the communication interface 4 with the apparatuses 5, 6 does not have to be a direct connection, but the communication interface 4 may be connected indirectly to the apparatuses 5, 6 via multiple interfaces, for example controlled by the respective plant operator operating the apparatuses 5, 6. In particular, it is possible that data received by the communication interface 4 is transferred to the apparatuses separately (e.g. via a data storage, such as a USB-stick) or automatically, e.g. wherein respective data are automatically assigned and transferred to the respective apparatus 5, 6.

The communication interface 4 is adapted to receive first data sets 14, 15 comprising object data from the two first users 1, 2 of the first user group 3, relating to at least one object 7 - 9 to be built. The first data sets 14, 15 the first users 1, 2 transmit to the communication interface 4 contain information, in particular object data, relating to the objects 7 - 9 to be additively manufactured. Each of the first data sets 14, 15 relates to at least one object 7 - 9, wherein, for example, the first data set 14 relates to the object 7 and the first data set 15 relates to the objects 8, 9. The three-dimensional data define the shape and/or at least an outer contour of the object 7 - 9 therefore, defining the size and the dimensions of the object 7 - 9.

The first users 1, 2 define in the respective first data sets 14, 15 a build material parameter, defining of which build material 10 the object 7 - 9 is to be built. Accordingly, the first users 1, 2 may define respective physical parameters, such as the density and/or mechanical properties of the build material 10 and/or the built object 7 - 9.

The communication interface 4 further is adapted to receive second data sets 16, 17 from two second users 18, 19. The two second users 18, 19 can be assigned to a second user group 20 that can be deemed as "provider"-group or "plant operator"-group, wherein the second users 18, 19 can be regarded as providers or plant operators, respectively. In this embodiment the second user 18 operates the apparatus 5 and the other second user 19 operates the apparatus 6. Thus, the second users 18, 19 provide their apparatuses 5, 6 for first users 1, 2, wherein objects 7 - 9 of the first users 1, 2 can be built using the apparatuses 5, 6.

The second users 18, 19 also define in the second data sets 16, 17 the build material 10 that is used on the build planes 13 of the apparatuses 5, 6 the second users 18, 19 operate. This enables a selection of potential build jobs submitted by the first users 1, 2, in that the build jobs may be selected that correspond in terms of the build material 10 used. Analogously, the second users 18, 19 define at least one physical parameter of the build material 10 used.

Further, the second users 18, 19 define parameters relating to the energy beam 11 generated in the apparatuses 5, 6. Each energy beam 11 may be defined regarding a variety of parameters, such as a beam power and/or a wavelength and/or a spot size and/or an available scanning speed and/or the type of source (laser beam, in particular laser diode, electron beam). Thus, the second users 18, 19 may provide data relating to the available energy beams 11 in that the first users 1, 2 may select or verify whether the apparatuses 5, 6 provided by the second users 18, 19 are suitable for manufacturing the intended three-dimensional object 7 - 9. For example, a build rate or a surface quality, in particular a surface roughness, may be defined by the second users 18, 19 (or defined by the apparatuses 5, 6), wherein the first users 1, 2 can verify, wether the provided build rate or surface quality is suitable. Vice versa, the first users 1, 2 may define the respective parameters that shall be achieved, wherein the second users 18, 19 (or the apparatuses 5, 6) may verify, wether the respective parameters can be met.

Another information contained in the second data sets 16, 17 relates to an occupancy rate of the build plane(s) 13. The occupancy rate of the build plane 13 leads, for example, to the costs the individual first users 1, 2 have to bear, wherein it is advantageous to use the available build plane 13 essentially to capacity, to avoid or reduce waste build material (non-consolidated build material) or build material that has to be recycled. The occupancy rate further allows for the first users 1, 2 to determine whether the objects 7 - 9 can be manufactured on the respective build plane 13 of the apparatus 5, 6, by determining the remaining available area of the build plane 13. Inversely, the second users 18, 19 can specifically select first data sets 14, 15 relating to objects 7 - 9 that fit a remaining available area of the build plane 13.

The communication interface 4 may be adapted to receive at least one price information of contained in the second data sets 16, 17. A build job of one of the first users 1, 2 is assigned to a manufacturing process performed on the apparatus 5, 6 of the second users 18, 19 dependent on the price information. Thus, the price information relates to the costs the first users 1, 2 would have to bear, if the corresponding object 7 - 9 was manufactured in the apparatus 5, 6.

The respective first users 1, 2 can select from the different offers of the second users 18, 19 dependent on the price information. It is also possible that build jobs are automatically assigned to second users 18, 19 that submitted the corresponding price information, for example, the assignment is automatically performed by the communication interface 4. The price information for the individual objects 7 - 9 may be based on the respective first data sets 14, 15 of the first users 1, 2.

Therefore, the second users 18, 19 may submit a price information to the communication interface 4, which price information is accessible by the first users 1, 2, who are able to select one of the second users 18, 19 (or apparatuses 5, 6, respectively) the respective build job shall be assigned to. Of course, the assignment of the build job can also be performed automatically, wherein the build job is assigned to the second user 18, 19 that submitted the corresponding price information, e.g. the lower price.

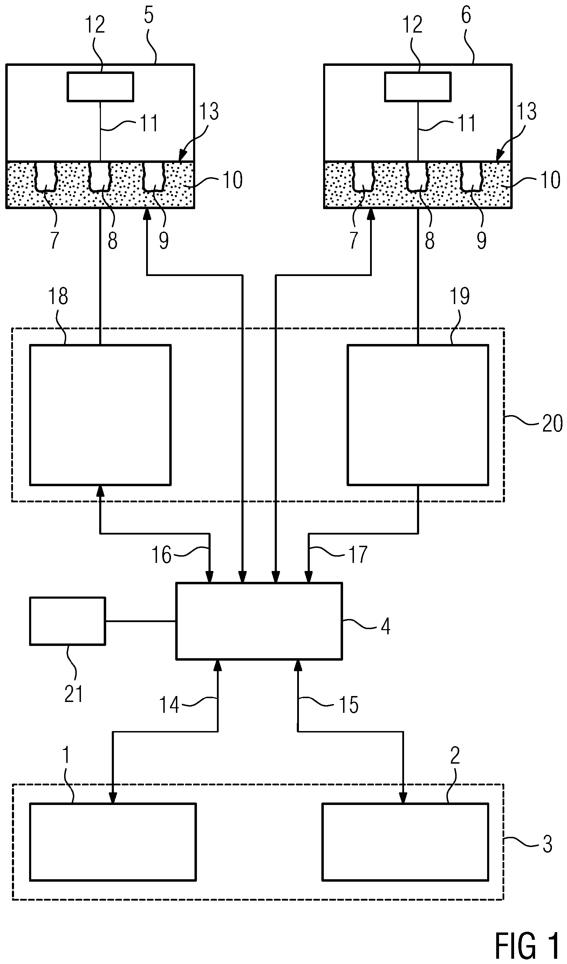

As can be derived from the embodiment depicted in Fig. 1, the build jobs of the first users 1, 2 may be auctioned, in that the respective build job is assigned to the second user 18, 19 with the corresponding price information, e.g. the lowest price.

Preferably, the first and/or second data sets 14 - 17 as well as build data and/or job data are transmitted in an encrypted form. Thus, confidential information, such as the specific geometry or various construction parameters of the individual objects 7- 9 are encrypted and cannot be accessed by other (first) users 1, 2 or, in general, personnel that is not authorized to have access to these information.

The communication interface 4 is, for example, designed as an internet platform on which the first users 1, 2 transmit (upload and store) their first data sets 14, 15 relating to the object 7 - 9 to be built.

Further, the communication interface is connected with a data storage 21 in which the respective data (first and second data sets 14 - 17, build data, job data) is stored. The data storage 21 is partially accessible for the second users 18, 19. The second users 18, 19 can partially access the first data sets 14, 15 submitted by the first users 1, 2. Based on the access, the second users 18, 19 can determine, whether the individual objects 7 - 9 fit into a planned manufacturing process, i.e. whether the remaining area of the build plane 13 is suitable for building the objects 7 - 9. The first data sets 14, 15 are therefore, abstracted in that details of the objects 7 - 9 are not accessible to the second users 18, 19. The other first users 1, 2, of course, do not gain access to the first data sets 14, 15 of other first users 1, 2, unless they are indicated as publicly accessible.

Further, it can be assured that only qualified or authorized personnel or second users 18, 19 can access the respective data, by at least one verification information, wherein only second users 18, 19 with the corresponding verification information gain (partial) access to the first data sets 14, 15 or in particular restricted first data sets 14, 15 that are not open to the public.

Besides, the first users 1, 2 have access to the second data sets 16, 17, for example, to retrieve information relating to the apparatuses 5, 6 or price information for respective build jobs for the objects 7 - 9. Again, at least one verification information may be provided, wherein only first users 1, 2 with the corresponding verification information gain access to the second data sets 16, 17 or in particular restricted second data sets 16, 17 that are not open to the public.

## Claims

1. Method for operating at least one apparatus (5, 6) for additively manufacturing of three-dimensional objects (7 - 9) by means of successive layerwise selective irradiation and consolidation of layers of a build material (10) which can be consolidated by means of an energy beam (11), **characterized in that** a communication interface (4) connected or connectable with the at least one apparatus (5, 6) is adapted to receive at least a first data set (14, 15) comprising object data from at least a first user (1, 2) of a first user group (3), relating to at least one object (7 - 9) to be built, and at least a second data set (16, 17) from at least one second user (18, 19) of a second user group (20), wherein the at least one first data set (14, 15) and/or the at least one second data set (16, 17) is stored and/or build data are generated and/or stored relating to the at least one object (7 - 9) to be built corresponding to the received data sets (14 - 17).

2. Method according to claim 1, **characterized in that** the at least one first data set (14, 15), in particular the object data, comprises at least one of the following parameters:
- three-dimensional data of at least one object (7 - 9) to be built
- at least one chemical parameter of the object (7 - 9) to be built, in particular a build material parameter
- at least one physical parameter of the object (7 - 9) to be built, in particular a density and/or a mechanical property
- time information relating to a due date
- initiation information
- information relating to at least one post-processing step

3. Method according to claim 1 or 2, **characterized in that** the at least one second data set (16, 17) comprises at least one of the following parameters:
- at least one chemical parameter of build material (10) used on at least one build plane (13)
- at least one physical parameter of build material (10) used on at least one build plane (13)
- at least one parameter relating to at least one energy beam (11)
- at least one parameter relating to a process chamber, in particular an inertization parameter
- at least one information to at least one available post-processing step
- at least one time information
- at least one information relating to an occupancy rate of the at least one build plane (13)
- at least one information relating to an availability of a process monitoring and/or a process documentation

4. Method according to one of the preceding claims, **characterized in that** the build data comprise at least one of the following parameters:
- at least one chemical parameter of the object (7 - 9) to be built, in particular a build material parameter
- at least one physical parameter of the object (7 - 9) to be built, in particular a density and/or a mechanical property
- time information relating to a duration of the manufacturing process of the object (7 - 9) to be built
- material consumption
- irradiation strategy

5. Method according to one of the preceding claims, **characterized by** at least one set of job data generated dependent on at least two first data sets (14, 15), wherein at least two objects (7 - 9) are assigned to the same build plane (13) dependent on the at least one set of job data.

6. Method according to claim 5, **characterized in that** the job data comprise at least one of the following parameters:
- number of objects (7 - 9) assigned to at least one build plane (13)
- time information relating to a duration of the manufacturing process of all objects (7 - 9) assigned to the same build plane (13)
- price information
- initiation information
- occupancy rate of a build plane (13) of the at least one apparatus (5, 6)
- number of build jobs
- number of first users (1, 2) of the first user group (3)

7. Method according to claim 6, **characterized in that** a manufacturing process is initiated dependent on the job data, in particular dependent on the at least one initiation information.

8. Method according to one of the preceding claims, **characterized in that** a data storage (21) is provided, wherein the first and/or second data sets (14 - 17) and/or object data and/or build data and/or job data are stored.

9. Method according to claim 8, **characterized in that** the data storage (21) is at least partially accessible for at least one second user (18, 19) of the second user group (20), in particular the outer dimensions of at least one object (7 - 9) to be built, is accessible to at least one second user (18, 19) of the second user group (20).

10. Method according to one of the preceding claims, **characterized in that** the at least one first data set (14, 15) is transferred encrypted.

11. Method according to one of the preceding claims, **characterized in that** the communication interface (4) is adapted to receive at least one price information of at least one second user (18, 19) of the second user group (20), wherein at least one build job of a first user (1, 2) of the first user group (3) is assigned to a manufacturing process of at least one second user (18, 19) of the second user group (20) dependent on the price information.

12. Method according to one of the preceding claims, **characterized in that** the communication interface (4) is adapted to receive at least one price information of at least two second users (18, 19) of the second user group (20), wherein at least one build job of at least one first user (1, 2) of the first user group (3) is assigned to a manufacturing process of one of the second users (18, 19) of the second user group (20) dependent on the received price information.

13. Method according to one of the preceding claims, **characterized in that** a topology of an object (7 - 9) to be built is optimized, **in that** a material consumption and/or a build time and/or an occupancy rate of the build plane (13) of the apparatus (5, 6) is reduced.

14. Method according to one of the preceding claims, **characterized by** a measurement device information that is accessible for at least one first user (1, 2) of the first user group (3), wherein at least one location of a measuring unit is stored, in particular at least one 3D-scanner in the vicinity of the location of the at least one first user (1, 2) of the first user group (3).

15. Method according to one of the preceding claims, **characterized in that** at least one first user (1, 2) of the first user group (3) is a consumer or a client and/or at least one second user (18, 19) of the second user group (20) is a plant operator or a provider.
